(19) Europäisches Patentamt
European Patent Office
Office européen des brevets

(11) Veröffentlichungsnummer: **0 114 625**
**B1**

(12) # EUROPÄISCHE PATENTSCHRIFT

(45) Veröffentlichungstag der Patentschrift: **10.08.88**

(51) Int. Cl.⁴: **C 07 F 9/165**, C 07 F 9/65, A 01 N 57/10

(21) Anmeldenummer: **84100310.6**

(22) Anmeldetag: **13.01.84**

(54) **O,S-Dialkyl-S-(carbamoyloxymethyl)-dithiophosphorsäureester, Verfahren zu ihrer Herstellung sowie ihre Verwendung als Schädlingsbekämpfungsmittel.**

(30) Priorität: **22.01.83 DE 3302095**

(43) Veröffentlichungstag der Anmeldung: **01.08.84 Patentblatt 84/31**

(45) Bekanntmachung des Hinweises auf die Patenterteilung: **10.08.88 Patentblatt 88/32**

(84) Benannte Vertragsstaaten: **BE CH DE FR GB IT LI NL**

(56) Entgegenhaltungen:
**EP-A-0 046 928**
**DE-A-2 206 678**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Seufert, Walter, Dr., Laerchenweg 19, D-6720 Speyer (DE)**
Erfinder: **Loeffler, Hans- Peter, Dr., Sinsheimer Strasse 42, D-6700 Ludwigshafen (DE)**
Erfinder: **Schirmer, Ulrich, Dr., Berghalde 79, D-6900 Heidelberg (DE)**
Erfinder: **Seppelt, Wolfgang, Dr., Lucas- Cranach-Strasse 8, D-6712 Bobenheim- Roxheim (DE)**
Erfinder: **Adolphi, Heinrich, Dr., Kalmitweg 11, D-6703 Limburgerhof (DE)**

**EP 0 114 625 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Es ist bereits bekannt (vgl. DE-B-1 060 659 und DE-A-2 206 678), daß O,O-Dialkyl-S-[N-monoalkylcarbamoyloxymethyl]-(thiono)thiolphosphorsäureester bzw. O-Alkyl-S-[carbamoyloxymethyl]-(thiono)-thiolphosphor (phosphen(säureester wie z. B. O,O-Diethyl-S-[N-methylcarbamoyloxymethyl]-phosphorsäureester oder O,O-Diethyl-S-[N-methylcarbamoyloxymethyl]-thionothiolphosphorsäureester eine insektizide und akarizide Wirkung besitzen.

Verbindungen, die das Strukturmerkmal

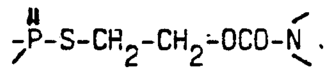

aufweisen, sind auch aus der EP-A-46 928 bekannt. Sie haben eine vergleichsweise geringe Wirkung z. B. als Mittel gegen Nematoden.

Es wurde nun gefunden, daß neue O,S-Dialkyl-S-[carbamoyloxymethyl]-dithiolphosphorsäureester der allgemeinen Formel (I)

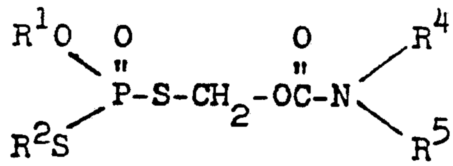

(I)

in der unabhängig voneinander

$R_1$ und $R_2$ je einen Alkylrest mit bis zu 4 Kohlenstoffatomen und

$R_4$ und $R_5$ Wasserstoff oder je einen Alkylrest mit bis zu 6 Kohlenstoffatomen bedeuten oder

$R_4$ und $R_5$ zusammen mit dem von ihnen eingeschlossenen Stickstoffatom einen mit bis zu 6 Kohlenstoffatomen und ggf. ein oder mehrere Sauerstoff-, Schwefel- oder Stickstoffatome aufweisenden gesättigten Ring bedeuten,

wesentlich besser insektizid und akarizid wirken als die bekannten O,O-Dialkyl-S-[carbamoyloxymethyl]-(thiono)thiol phosphorsäureester analoger Konstitution und gleicher Wirkungsrichtung. Die erfindungsgemäßen Produkte stellen somit eine echte Bereicherung der Technik dar.

Man kann einen erfindungsgemäßen O,S-Dialkyl-S-[carbamoyloxyalkyl]-dithiolphosphorsäureester (1) erhalten, wenn man ein entsprechendes O,S-Dialkyldithiolphosphat der allgemeinen Formel (II)

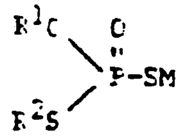

(II)

in der

M für einen Alkali-, Erdalkali- oder gegebenenfalls Alkyl-substituiertes Ammoniumäquivalent steht,

mit einem entsprechenden Carbamidsäure-monohalogenalkylester der Formel (III)

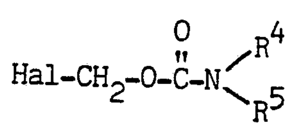

(III)

in der

Hal für Chlor oder Brom steht,

umsetzt.

Geht man beispielsweise aus von dem Dimethylammoniumsalz der O-Ethyl-S-n-propyl-dithiolphosphorsäure und N-Methyl-carbamidsäure-monochlormethylester, so kann der Reaktionsverlauf durch das folgende Formelschema wiedergegeben werden:

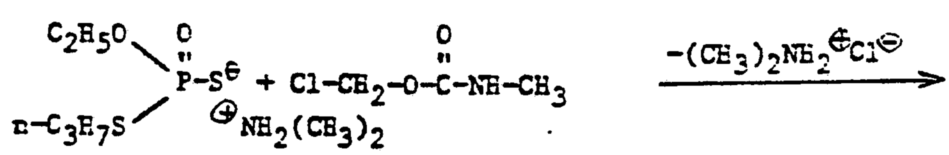

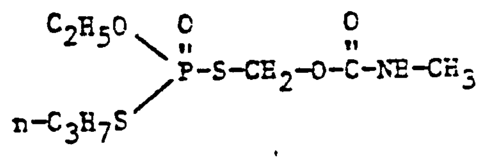

Die zu verwendenden Ausgangsstoffe sind durch die Formeln (II) und (III) allgemein definiert. Vorzugsweise stehen $R_1$ und $R_2$ jedoch für geradkettige oder verzweigte Alkylreste mit 2 bis 4 Kohlenstoffatomen, wie Ethyl, n- oder iso-Propyl, sec.- oder iso-Butyl.

Beispiele für Phosphate (II) sind etwa die Kalium-, Natrium- oder Ammoniumsalze der O-Methyl- oder O-Ethyl-S-ethyl- oder n- bzw. iso-Propyl oder iso- bzw. sec.-Butyl-dithiolphosphorsäure.

Beispiele für Carbamidsäureester (III) sind etwa N-Methyl-, N-Ethyl-, N-Propyl-, N-Isopropyl-, N,N-tetramethylen-, N,N-Dimethyl-, N,N-Diethyl- und N,N-Dipropylcarbamidsäuremonochlor- oder monobrommethylester.

Die vorstehenden Ausgangsstoffe sind auch in technischem Maßstab leicht und mit guter Ausbeute zugänglich. Sie werden beispielsweise durch Chlorierung von Chlorameisensäuremethylester (vgl. Hentschel, J. prakt. Chem. (2) 36, 213 [1887] und anschließende Umsetzung des erhaltenen Chlorameisensäuremonochlormethylesters mit Ammoniak bzw. dem betreffenden primären oder sekundären Amin erhalten.

Als Lösungs- bzw. Verdünnungsmittel kommen bei der Durchführung des Herstellungsverfahrens praktisch alle inerten organischen Lösungs- bzw. Verdünnungsmittel in Frage. Hierzu gehören insbesondere aliphatische und aromatische, gegebenenfalls chlorierte Kohlenwasserstoffe, wie Benzol, Toluol, Xylol, Benzin, Methylenchlorid, Chloroform, Tetrachlorkohlenstoff, Chlorbenzol, Ether, wie Diethyl- und Dibutylether, ferner Ketone, wie Aceton, Methylethyl-, Methylisopropyl- und Methylisobutylketon und Alkohole wie iso-Propanol und andere. Besonders bewährt haben sich jedoch Nitrile, wie Aceto- und Propionitril.

Die Umsetzungen laufen im allgemeinen bei einer ausreichenden Temperatur unterhalb von 100°C, vorzugsweise bei bis zu 70°C bei atmosphärischem Druck ab.

Dabei werden die Verbindungen (II) bzw. (III) i.a. in stöchiometrischen Verhältnissen eingesetzt. Ein Überschuß des einen oder anderen Reaktionsteilnehmers bringt keine wesentlichen Vorteile, schließt jedoch die Umsetzung nicht aus.

Die erfindungsgemäßen Stoffe fallen meist in Form farbloser bis schwach gelb gefärbter, viskoser, wasserunlöslicher Öle an, die sich nicht unzersetzt destillieren lassen, jedoch durch sogenanntes "Andestillieren", d. h. längeres Erhitzen unter vermindertem Druck auf mäßig erhöhte Temperatur von flüchtigen Anteilen befreit und auf diese Weise gereinigt werden können. Zu ihrer Charakterisierung dient vor allem der Brechungsindex.

Wie bereits erwähnt, zeichnen sich die erfindungsgemäßen neuen Stoffe durch hervorragende insektizide und akarizide Eigenschaften aus. Sie besitzen dabei eine gute Wirksamkeit sowohl gegen saugende als auch beißende Insekten, Dipteren, Milben sowie eine systemische und bodeninsektizide Wirkung, insbesondere aber hervorragende Wirkung gegen Lepidopteren. Darüber hinaus zeichnen sich diese Verbindungen durch wesentlich geringere Toxizität im Vergleich zu denen in der DE-OS-2 206 678 beschriebenen aus.

**Herstellungsbeispiele**

Die Herstellung des beispielhaft als Ausgangsmaterial benötigten N,N-Dimethylcarbamidsäure-alpha-monochlorethylesters geschieht z. B. wie folgt: 55 g (0,38 mol) Chlorameisensäure-alpha-chlorethylester werden in 500 ml Ether gelöst. Bei -30°C tropft man 38 g (0,4 mol) kondensiertes Dimethylamin langsam hinzu und läßt über Nacht bei Raumtemperatur stehen. Man filtriert vom Dimethylammoniumchlorid ab, wäscht mit Ether nach und engt i.V. bei Raumtemperatur ein. Der Rückstand wird destilliert. Man erhält 32,5 g (0,215 mol) N,N-Dimethylcarbamidsäure-alpha-monochlorethylester, Spt. 40 bis 42°C/0,4 bis 0,5 mbar.

Analyse (M.G. 152):

| | | | | |
|---|---|---|---|---|
| Ber: | C 39,6 | H 6,7 | N 9,2 | Cl 23,4 |
| Gef: | C 39,7 | H 6,8 | N 9,3 | Cl 24,2 |

**Beispiel 1**

O-Ethyl-S-n-propyl-S-[N,N-tetramethylen-carbamoyloxymethyl]-dithiolphosphorsäureester

Zu 12,3 g (0,05 mol) Dimethylammonium O-Ethyl-S-n-propyl-dithiolphosphat in 100 ml Acetonitril führt man allmählich bei Raumtemperatur 6,5 g (0,04 mol) N,N-tetramethylen-carbamidsäure-monochlormethylester.

Nach 4 h bei 50°C engt man unter vermindertem Druck ein, nimmt in 300 ml Toluol auf, wäscht dreimal mit je 50 ml Wasser und trocknet über $Na_2SO_4$. Nach dem Abdestillieren der Hauptmenge an Lösungsmittel beläßt man nach 1,5 h an der Ölpumpe bei 50°C. Ausbeute 8,5 g (0,026 mol) entsprechend 65 % der berechneten Ausbeute; $n^{22}_D$ = 1,5229.

Analyse bezogen auf Molgewicht 327:

| | | | | | |
|---|---|---|---|---|---|
| Ber: | C 40,4 | H 6,8 | N 4,3 | S 19,6 | P 9,4 |
| Gef: | C 40,6 | H 6,7 | N 4,5 | S 18,9 | P 8,7 |

**Beispiel 2**

O-Ethyl-S-n-Propyl-S-[N,N-(3-oxa)-pentamethylencarbamoyloxymethyl]-dithiolphosphorsäureester

Zu 12,3 g (0,05 mol) Dimethylammonium O-Ethyl-S-n-propyl-dithiolphosphat in 100 ml Acetonitril werden bei Raumtemperatur 7,2 g (0,04 mol) N,N-(3-Oxa)-pentamethylen-carbamidsäure-monochlormethylester zugesetzt. Man erwärmt 4 h auf 50°C, entfernt das Lösungsmittel i.V., nimmt in 300 ml Toluol auf, schüttelt dreimal mit je 50 ml Wasser aus und trocknet über $Na_2SO_4$. Nach Abdestillieren der Hauptmenge beläßt man noch 2 Stunden an der Ölpumpe. Ausbeute 7,5 g (0,022 mol = 55 %) eines gelben Öls; $n^{21}_D$ = 1,5240.

Analyse (M.G. 343):

| | | | |
|---|---|---|---|
| Ber: | C 38,5 | H 6,5 | N 4,1 |
| Gef: | C 38,7 | H 6,5 | N 4,4. |

**Beispiel 3**

O-Ethyl-S-i-propyl-S-[N,N-dimethyl-carbamoyloxymethyl]dithiophosphorsäureester

Zu einer Lösung von 11,8 g (0,048 mol) Dimethylammonium-O-Ethyl-S-i-propyl-dithiolphosphat in 100 ml Acetonitril gibt man unter Rühren bei Raumtemperatur 5,6 g (0,04 mol) N,N-Dimethylcarbamidsäure-monochlormethylester. Nach 10 h bei 35°C zieht man das Lösungsmittel i.V. ab und nimmt in 300 ml Toluol auf. Man wäscht dreimal schnell mit je 50 ml Wasser, trocknet über $Na_2SO_4$ und entfernt die Hauptmenge des Lösungsmittel i.V.. Man beläßt den zurückbleibenden öligen, gelben Ester noch 2 h bei 50°C an der Ölpumpe. Ausbeute 7,7 g (0,026 mol = 65 %); $n^{26}_D$ = 1,5085.

Analyse (M.G. 301):

| | | | | | |
|---|---|---|---|---|---|
| Ber. | C 35,9 | H 6,7 | N 4,7 | S 21,3 | P 10,3 |
| Gef: | C 35,6 | H 6,6 | N 4,9 | S 21,5 | P 10,1. |

**Beispiel 4**

O-Ethyl-S-sec.-butyl-S-[H-methyl-carbamoyloxymethyl]-dithiolphosphorsäureester

Zu 13,0 g (0,05 mol) Dimethylammonium O-Ethyl-S-sec.-butyl-dithiolphosphat in 100 ml Acetonitril gibt man bei Raumtemperatur 4,9 g (0,04 mol) N-Methyl-carbamidsäure-monochlormethylester. Nach 2 Stunden bei 50°C zieht man das Lösungsmittel i.V. ab, nimmt in 300 ml Toluol auf, wäscht schnell dreimal mit je 50 ml Wasser, trocknet über $Na_2SO_4$ und engt i.V. ein. Den zurückbleibenden Ester beläßt man noch 2 h bei 40°C an der Ölpumpe.

Ausbeute 7,5 g (0,025 mol = 63 %) zähes, gelbes Öl. $n^{23}_D$ = 1,5165.

Analyse (M.C. 301):

| | | | | | |
|---|---|---|---|---|---|
| Ber: | C 35,8 | H 6,6 | N 4,6 | S 21,2 | P 10,3 |
| Gef: | C 35,8 | H 6,6 | N 4,5 | S 21,7 | P 10,4 |

Die in der nachstehenden Tabelle mit dem Brechungsindex aufgeführten Verbindungen wurden unter entsprechender Abwandlung der vorstehenden Herstellbeispiele in ähnlicher Ausbeute erhalten.

Die übrigen Verbindungen können durch sinngemäße Verwendung anderer Ausgangsstoffe erhalten werden; aufgrund ihrer strukturellen Ähnlichkeit lassen sie eine ähnliche Wirkung erwarten wie die näher untersuchten Verbindungen.

**Tabelle**

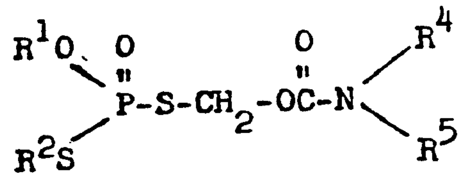

(I).

| Beispiel | $R^1$ | $R^2$ | $R^4$ | $R^5$ | °C $n_D$ |
|---|---|---|---|---|---|
| 5 | $C_2H_5$ | S-n $C_3H_7$ | $CH_3$ | H | 26 1.5188 |
| 6 | " | S-i-$C_3H_7$ | " | " | 26 1.5160 |
| 7 | " | S-i-$C_4H_9$ | " | " | 23 1.5140 |
| 8 | " | S-sec.-$C_4H_9$ | " | $CH_3$ | 26 1.5060 |
| 9 | " | S-i-$C_4H_9$ | " | " | 23 1.5088 |
| 10 | " | S-sec.-$C_4H_9$ | $-(CH_2)_4-$ | | 22 1.5200 |
| 11 | " | S-i-$C_4H_9$ | $-(CH_2)_4-$ | | 22 1.5190 |
| 12 | " | S-sec.-$C_4H_9$ | $-(CH_2)_2-O-(CH_2)_2-$ | | 22 1.5185 |
| 13 | " | S-i-$C_4H_9$ | $-(CH_2)_2-O-(CH_3)_2-$ | | 22 1.5148 |
| 14 | " | S-n-$C_3H_7$ | H | H | |
| 15 | " | S-i-$C_3H_7$ | " | " | |
| 16 | $C_2H_5$ | S-i-$C_4H_9$ | " | " | |
| 17 | " | S-sec.-$C_4H_9$ | " | " | |
| 18 | $CH_3$ | S-n-$C_3H_7$ | $CH_3$ | $CH_3$ | |
| 19 | " | " | " | " | |
| 20 | $C_2H_5$ | S-n-$C_3H_7$ | $-(CH_2)_5-$ | | |
| 21 | " | S-i-$C_3H_7$ | " | | |
| 22 | " | S-i-CH- | " | | |
| 23 | " | S-sec.-$C_4H_9$ | " | | |
| 24 | " | S-n-$C_3H_7$ | $-(CH_2)_2-S-(CH_2)_2-$ | | |
| 25 | " | S-i-$C_3H_7$ | " | | |
| 26 | " | S-i-$C_4H_9$ | " | | |
| 27 | $C_2H_5$ | S-sec.-$C_4H_9$ | " | " | |
| 28 | " | " | $C_3H_7$ | H | |
| 29 | " | S-i-$C_4H_9$ | " | " | |
| 30 | " | S-n-$C_3H_7$ | " | $C_3H_7$ | |
| 31 | " | S-i-$C_3H_7$ | " | " | |
| 32 | " | S-i-$C_4H_7$ | " | " | |
| 33 | " | S-sec.-$C_4H_9$ | " | " | |

Die vorstehend aufgeführten und andere erfindungsgemäße Wirkstoffe werden auf die für Phosphorsäureester übliche Weise angewendet. Angaben zur Formulierung, Anwendungstechnik und Wirkungsweise und Angaben über geeignete Mischungspartner zur Erzielung synergistischer und anderer vorteilhafter Wirkungen können beispielsweise der US-A-4 320 122 entnommen werden.

Als Vergleichsmittel wurden die aus der DE-A-2 206 678 bekannten Verbindungen

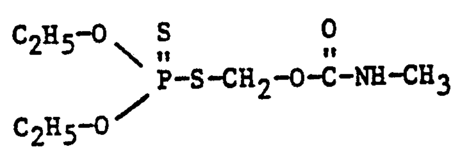

(A)

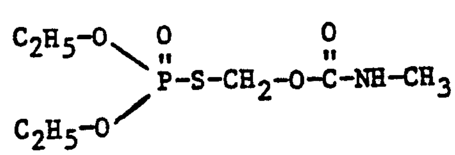

(B)

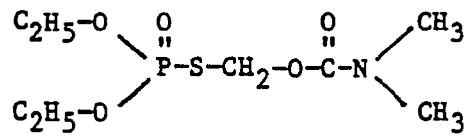

(C)

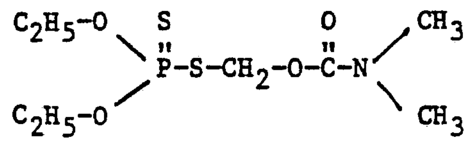

(D)

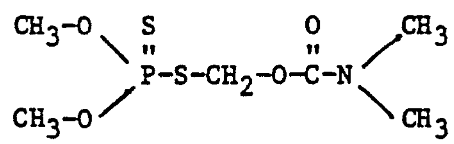

(E)

gewählt.

**Zuchtversuch mit Stubenfliegen-Larven (Musca domestica)**

Je 4,5 ml Magermilch füllt man in 50 ml Penicillingläser und versetzt sie darauf mit 0,5 ml der wäßrigen Wirkstoffaufbereitung. Nach kurzem Mischen fügt man ein Wattebällchen dazu und belegt dieses mit ca. 50 Ei-Larven der Stubenfliege.

Die Gläser lagert man abgedeckt bei Raumtemperatur und beurteilt die Entwicklung nach 7 Tagen.

Bei diesem Versuch erzielten die Wirkstoffe der Beispiele 1, 2, 5, 7, 8, 9, 12, 13 und 14 in einer Konzentration von 0,2 bis 0,5 ppm 100 %-ige Wirkung; Die Vergleichsmittel waren in der gleichen Weise erst bei 10fach höherer Konzentration wirksam.

**Plutella maculipennis, Kohlschaben-Raupen; Fraß- und Kontaktwirkung**

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

Bei diesem Versuch erzielten die Wirkstoffe der Beispiele 2, 4, 5, 8, 9, 12, 13, 14 und 15 in einer Konzentration von 0,005 % oder weniger vollständige Wirkung, während die Vergleichsmittel A, B, C und D erst in etwa 10fach höherer Konzentration voll wirkten.

**Zuchtversuch, Mittelmeer-Fruchtfliege (Ceratitis capitata)**

Die Versuche werden in 100 ml Plastik-Bechern auf 40 g eines Nährbodens aus Karottenpulver und Wasser 1: 3 mit Hefezusatz durchgeführt.

Der Wirkstoff wird als wäßrige Aufbereitung in den fertigen Brei eingerührt und dieser mit 100 bis 200 frischen Eiern beimpft. Es ist darauf zu achten, daß die wäßrige Eier-Aufschlämmung sehr schnell verwendet wird, da sonst die Larven bereits schlüpfen und absterben.

Die Becher werden bei 24 bis 26°C geschlossen aufbewahrt; nach ca. einer Woche kann die Entwicklung beurteilt werden.

Im Vergleich zum Mittel C, das in einer Konzentration von etwa 2 ppm voll wirksam war, wurden die Wirkstoffe der Beispiele 2, 4, 5, 6, 8, 9, 12, 13, 14 und 15 in bis zu 40mal geringerer Konzentration benötigt, um eine gute Wirkung zu erzielen.

**Wirkung auf Raupen von Agrotis ypsilon**

Junge Maisblätter werden 3 Sekunden in die wäßrige Aufbereitung der Wirkstoffe getaucht. Nach dem Antrocknen der Beläge bringt man sie in Petrischalen (Ø 12 cm) und besetzt diese mit 5 Raupen von ca. 1,5 cm Länge. Die Wirkung wird nach 48 Stunden bestimmt.

In diesem Versuch erzielten Konzentrationen der Wirkstoffe 1, 5, 8, 12, 13 und 15 bereits unter 0,02 % eine gute Wirkung, während 4 der Vergleichsmittel bei doppelt so hoher Konzentration noch ungenügend wirkten.

**Kontaktwirkung auf Zecken (Ornithodorus moubata)**

Die Prüfung erfolgt an jungen Zecken, die erst einmal Blut aufgenommen haben. Je 5 Tiere werden in einen TEEFIX®-Beutel 5 Sekunden in die wäßrige Wirkstoffaufbereitung getaucht, der Beutel wird frei aufgehängt. Die Versuchstemperatur beträgt 25 bis 26°C. Nach 48 Stunden ermittelt man die Mortalitätsrate.

In diesem Versuch wurde gute bis vollständige Wirkung schon bei einer Konzentration von 10 ppm oder weniger bei allen untersuchten Wirkstoffen beobachtet.

**Wirkung auf Wurzelgallennematoden (Meloidogyne incognita)**

Je 300 g Komposterde werden mit 30 ml der wäßrigen Wirkstoffaufbereitung innig vermischt und in Plastiktöpfe gefüllt. Darauf bepflanzt man die Töpfe mit Tomatensetzlingen und hält diese unter Gewächshausbedingungen bei 22 bis 24°C.

Nach 6 bis 8 Wochen untersucht man die Wurzeln auf Gallenbildung.

Mit einer Wirkstoffkonzentration von 0,1 % und - z.T. wesentlich - darunter wurde bei diesem Versuch die Gallenbildung vollständig unterdrückt; untersucht wurden die Wirkstoffe Nr. 4, 5, 7, 9, 12, 13, 14 und 15.

Die Vergleichsmittel erwiesen sich sämtlich bei einer Konzentration von 0,1 % als ungenügend wirksam.

**Patentansprüche**

1. 0,5-Dialkyl-S-[carbamoyloxymethyl]-dithiolphosphorsäureester der allgemeinen Formel (I)

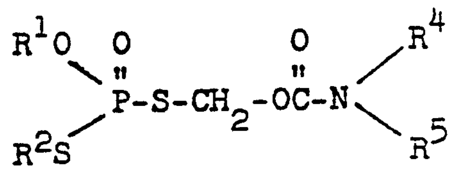

(I)

in der unabhängig voneinander

$R^1$ und $R^2$ je einen Alkylrest mit bis zu 4 Kohlenstoffatomen und

$R^4$ und $R^5$ Wasserstoff oder je einen Alkylrest mit bis zu 6 Kohlenstoffatomen bedeuten oder

$R^4$ und $R^5$ zusammen mit dem von ihnen eingeschlossenen Stickstoffatom einen bis zu 6 Kohlenstoffatomen und ggf. ein oder mehrere Sauerstoff-, Schwefel- oder Stickstoffatome aufweisenden, gesättigten Ring bedeuten.

2. Verfahren zur Herstellung von O,S-Dialkyl-S-[carbamoyloxymethyl]-dithiolphosphorsäureestern, gemäß Anspruch 1, dadurch gekennzeichnet, daß ein entsprechendes O,S-Dialkyl-dithiolphosphat der allgemeinen Formel II

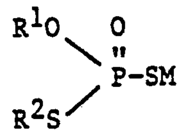

(II)

in der

M für ein Alkali-, Erdalkali- oder gegebenenfalls Alkyl-substituiertes Ammoniumäquivalent steht,

mit einem entsprechenden Carbamidsäure-monohalogenalkylester der Formel (III)

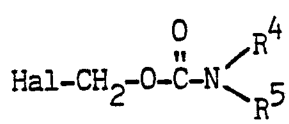

(III)

in der

Hal für Chlor oder Brom steht,

umsetzt.

3. Insektizides und akarizides Mittel, enthaltend eine Verbindung gemäß Anspruch 1.

4. Verfahren zur Bekämpfung von Insekten oder Milben, dadurch gekennzeichnet, daß man eine Verbindung gemäß Anspruch 1 auf diese bzw. deren Lebensraum einwirken läßt.

5. Verwendung einer Verbindung gemäß Anspruch 1 zur Bekämpfung von Insekten oder Milben.

6. Verfahren zur Herstellung von insektiziden und akariziden Mitteln, dadurch gekennzeichnet, daß man eine Verbindung gemäß Anspruch 1 mit Streckmitteln und/oder oberflächenaktiven Mitteln mischt.

**Revendications**

1. Ester d'acide O,S-dialkyl-S-[carbamoyloxyméthyl]-dithiolphosphorique de formule générale (I)

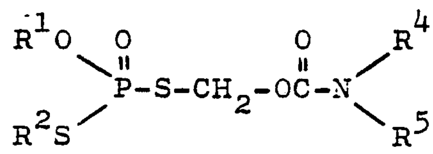

(I)

dans laquelle, indépendamment l'un de l'autre,

$R^1$ et $R^2$ représentent chacun un reste alkyle ayant jusqu'à 4 atomes de carbone et

$R^4$ et $R^5$, hydrogène ou chacun un reste alkyle ayant jusqu'à 6 atomes de carbone, ou

$R^4$ et $R^5$ ensemble avec l'atome d'azote qu'ils entourent représentent un noyau saturé, possédant jusqu'à 6 atomes de carbone et, éventuellement, un ou plusieurs atomes d'oxygène, soufre ou azote.

2. Procédé de préparation d'esters d'acide O,S-dialkyl-S-[carbamoyloxyméthyl]-dithiolphosphorique selon la revendication 1, caractérisé par le fait qu'on fait réagir un O,S-dialkyl-dithiolphosphate de formule générale II

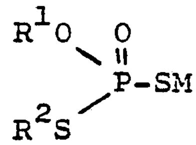

(II)

,

dans laquelle

M représente un équivalent d'alcalin, d'alcalino-terreux, ou d'ammonium éventuellement substitué par alkyle, avec un ester monohalogénoalkylique d'acide carbamidique correspondant de formule III

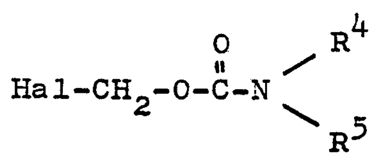

(III)

dans laquelle Hal représente chlore ou brome.

3. Agent insecticide et acaricide, contenant un composé selon la revendication 1.

4. Procédé pour lutter contre des insectes et acariens, caractérisé par le fait que l'on fait agir un composé selon la revendication 1 sur ceux-ci ou leur biotope.

5. Utilisation d'un composé selon la revendication 1 pour la lutte contre insectes et acariens.

6. Procédé de préparation d'agents insecticides et acaricides, caractérisé par le fait que l'on mélange un composé selon la revendication 1 avec des agents diluants et/ou tensio-actifs.

**Claims**

1. An O,S-dialkyl S-[carbamyloxymethyl]-dithiophosphate of the formula (I)

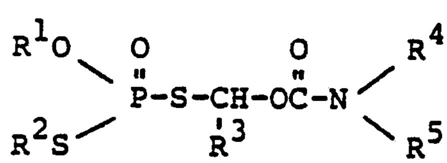

(I)

where, independently of one another, $R^1$ and $R^2$ each represent alkyl of not more than 4 carbon atoms and $R^4$ and $R^5$ each represent hydrogen or alkyl of not more than 6 carbon atoms, or $R^4$ and $R^5$, together with the nitrogen atom to which they are bonded, form a saturated ring which contains not more than 6 carbon atoms and may or may not contain one or more oxygen, sulfur or nitrogen atoms.

2. A process for the preparation of O,S-dialkyl S-[carbamyloxymethyl]-dithiophosphates as claimed in claim 1, wherein an appropriate O,S-dialkyl dithiophosphate of the formula (II)

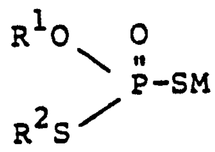

(II)

where M is an equivalent of an alkali metal, of an alkaline earth metal or of an unsubstituted or alkylsubstituted ammonium ion, is reacted with an appropriate monohaloalkyl carbamate of the formula (III)

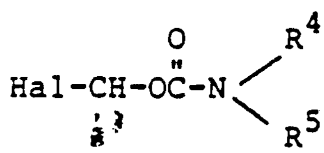

(III)

where Hal is chlorine or bromine.

3. An insecticidal and acaricidal agent containing a compound as claimed in claim 1.

4. A process for combating insects or mites, wherein a compound as claimed in claim 1 is allowed to act on them or their habitat.

5. The use of a compound as claimed in claim 1 for combating insects or mites.

6. A process for manufacturing insecticidal and acaricidal agents, wherein a compound as claimed in claim 1 is mixed with extenders and/or surfactants.